(19) Europäisches Patentamt
European Patent Office
Office européen des brevets

(11) **EP 1 527 104 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **03766199.8**

(22) Anmeldetag: **17.07.2003**

(51) Int Cl.:
***C08F 2/24*** *(2006.01)* ***C08B 11/193*** *(2006.01)*
***C08F 290/10*** *(2006.01)* ***C08B 11/20*** *(2006.01)*
***C09D 157/00*** *(2006.01)* ***C08F 251/02*** *(2006.01)*

(86) Internationale Anmeldenummer:
**PCT/EP2003/007749**

(87) Internationale Veröffentlichungsnummer:
**WO 2004/013186 (12.02.2004 Gazette 2004/07)**

(54) **MISCHUNGEN ALKYLIERTER UND NICHT ALKYLIERTER CELLULOSEETHERE UND DEREN VERWENDUNG**

MIXTURES OF ALKYLATED AND NON-ALKYLATED CELLULOSE ETHERS AND USE THEREOF

MELANGES D'ETHERS DE CELLULOSE ALKYLES OU NON ALKYLES ET UTILISATION

(84) Benannte Vertragsstaaten:
**AT BE BG CH CY CZ DE DK EE ES FI FR GB GR HU IE IT LI LU MC NL PT RO SE SI SK TR**

(30) Priorität: **31.07.2002 DE 10234840**
**14.11.2002 DE 10252970**

(43) Veröffentlichungstag der Anmeldung:
**04.05.2005 Patentblatt 2005/18**

(73) Patentinhaber: **SE Tylose GmbH & Co.KG**
**65203 Wiesbaden (DE)**

(72) Erfinder:
- **KRÄMER, Eckart**
**65187 Wiesbaden (DE)**
- **GALLER, Heiko**
**55278 Hahnheim (DE)**
- **FALK, Uwe**
**63486 Bruchköbel (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
**US-A- 4 684 704**
**US-A- 5 795 928**
**US-A- 5 994 531**
**US-A- 6 111 011**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 527 104 B1

## Beschreibung

Die Herstellung von Vinylpolymeren durch radikalische Polymerisation in wäßrigem, lösungsmittelfreiem Medium macht eine Emulgierung der hydrophoben Monomeren und nach erfolgter Polymerisation die Stabilisierung des Polymers erforderlich. Hierzu werden neben Tensiden auch Schutzkolloide benötigt, die einerseits hydrophilen Charakter besitzen, andererseits auch eine dispergierende Wirkung zeigen. Polymere Kohlenhydrate wie Stärke, Dextrane und wasserlösliche Cellulosederivate sind bekannt als geeignete Schutzkolloide für wasserbasierende Polymerisationssysteme. Das in der kommerziellen Herstellung von Polyvinylacetat und Copolymeren am häufigsten eingesetzte Schutzkolloid ist Hydroxyethylcellulose (Cellulose and its Derivatives, Kap. 26, Ellis Horwood, 1985).

Die Eigenschaften und Qualität der Kunststoffdispersion hängen entscheidend von der Wahl des Schutzkolloids ab, welches in verschiedenen physikalischen Größen wie Molekulargewicht, Substitutionsart und -grad etc. variieren kann. Wichtige Qualitätskriterien der Kunstoffdispersion, die durch Schutzkolloide beeinflußt werden sind z.B. die Viskosität, Rheologie, Partikelgröße, Koagulat, Wasseraufnahme des gebildeten Films und das Molekulargewicht des Polymers. Weiterhin erhöht der Einsatz die Stabilität der Dispersion gegen externe Einflüsse wie Transport, Handhabung, Förderung, erhöht die Beständigkeit gegen Temperaturschwankung und reduziert die Empfindlichkeit auf Additive wie z.B. Pigmente.

Als entscheidender Vorgang beim Einsatz von Schutzkolloiden in der Emulsionspolymerisation wird die Radikalbildung am Schutzkolloid und anschließende Pfropfung des Monomers auf das Kolloid angesehen. Die Pfropfrate hängt sowohl vom Radikalinitiator als auch von der Natur und Konzentration des Schutzkolloids ab. Die Schutzkolloidwirkung erhöht sich mit ansteigender Einsatzmenge, was jedoch aus Kostengründen und aus anwendungstechnischen Gesichtspunkten (Wasseraufnahme des Films) unerwünscht ist. Eine Verbesserung der Pfropfung wird mit Schutzkolloiden erwartet, die ungesättigte und damit polymerisierbare Gruppen enthalten, die dann zusätzlich zur physikalischen Adsorption eine kovalente Bindung an das Partikelmaterial ermöglicht.

In SU-14 848 14 ist offenbart, daß allylgruppenhaltige Cellulosederivate, die einen Substitutionsgrad an Allylethergruppen von 0,04 bis 0,3 und einen Polymerisationsgrad von 1000 bis 1200 aufweisen, mit Vinylacetat gepfropft werden können. Schutzkolloide mit derart hohen Polymerisationsgraden sind in Polymerisationssystemen jedoch weniger geeignet, da die hohen Viskositäten mit Rühr- und Förderproblemen verbunden sind.

In EP-0 541 939 B1 werden allylglycidyletherhaltige polymere Cellulosederivate offenbart, die bei einem Substitutionsgrad von 0,05 bis 0,5 Allylglycidylgruppen pro monomere Kohlenhydrateinheit ebenfalls polymerisierbar sind. Der Zusatz derart modifizierter Kohlenhydrate erhöht die Scheuerfestigkeit von Anstrichstoffen.

Polymerisierbare alkenylgruppenhaltige Methylhydroxypropylcelluloseether und deren Verwendung bei der Herstellung von Folien und Beschichtungen werden in EP 0 457 092 B1 offenbart. Der molare Substitutionsgrad wird mit 0,05 bis 1,0 angegeben.

In der US 6 111 011 sind butenyl-modifizierte, wasserlösliche, nicht ionische Celluloseether offenbart. Pro Anhydroglucose-Einheit enthalten sie durchschnittlich 0,003 bis 0,5, bevorzugt 0,02 bis 0,06, Butenylgruppen. Sie werden als Schutzkolloide bei der Herstellung von wäßrigen Polymerdispersionen eingesetzt.

Es wird in EP 0 863 158 A2 (= US 5 994 531) offenbart, daß mit wasserlöslichen, nichtionischen Celluloseethern aus der Gruppe der Alkylcellulosen und Hydroxyalkylcellulosen mit einem durchschnittlichen Polymerisationsgrad unterhalb von 900, die durchschnittlich mit 0,01 bis 0,04 2-Propenylgruppen pro Anhydroglucose-einheit substituiert sind (AM-HEC), unter wesentlich geringerer Einsatzmenge an Schutzkolloid wäßrige Polymerdispersionen mit mindestens gleicher Qualität gegenüber herkömmlichen, keine 2-Propenylgruppen-enthaltenden Schutzkolloide (meist Hydroxyethylcellulose (HEC)) hergestellt werden können. Die Dispersionen besitzen unterschiedliche Eigenschaften gegenüber denen, die mit HEC hergestellt werden (z.B. Viskosität, Wasseraufnahme des Films, Partikelgröße, rheologisches Verhalten). AM-HEC wird daher bevorzugt in Neuformulierungen verwendet.

Zugrundeliegende Aufgabe war es, Zusammensetzungen von Polymerdispersionen zu finden, die insbesondere bei Verwendung als Schutzkolloid eine Reduzierung der verwendeten Menge erlauben.

Überraschenderweise wurde gefunden, daß Abmischungen der üblicherweise verwendeten HEC als Schutzkolloid mit AM-HEC eine Reduzierung der Gesamteinsatzmenge ohne gravierenden Eigenschaftseinfluß auf die resultierende Polymerdisperson erlauben. Weiterhin ließ sich zeigen, daß höher allylmodifizierte Hydroxyethylcellulosen im Gemisch mit Hydroxyethylcellulose unter reduzierter Einsatzmenge ebenfalls zu qualitativ hochwertigen Dispersionen führen.

Gegenstand der Erfindung sind Mischungen aus Celluloseethern, enthaltend

A) allylmodifizierte Celluloseether der Formel (1)

$$[C_6H_7O_2(OR^1)(OR^2)(OR^3)]_n \qquad (1)$$

wobei

| | |
|---|---|
| $C_6H_7O_2$ | eine Anhydroglucoseeinheit |
| n | 50 bis 1600 |
| $R^1$, $R^2$ und $R^3$ | unabhängig voneinander eine Polyalkylenoxidkette der Formel (2) |

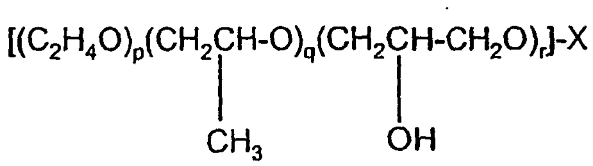

(2)

mit X = H, $CH_3$, $C_2H_5$ oder $CH_2CH = CH_2$ darstellt, und worin p, q und r unabhängig voneinander in $R^1$, $R^2$ und $R^3$ jeweils unabhängig Werte von 0 bis 4 annehmen können, die Summe (p+q+r) addiert über $R^1$, $R^2$ und $R^3$ pro Anhydroglucoseeinheit durchschnittlich größer als 1,3 und kleiner als 4,5 ist, und wobei die Reihenfolge der Oxyalkyleinheiten in der Polyalkylenoxidkette beliebig ist und die durchschnittliche Anzahl der $-CH_2CH = CH_2-$ Gruppen pro Anhydroglucoseeinheit 0,01 bis 0,1 beträgt, und

B) Celluloseether der Formel (3)

$$[C_6H_7O_2(OR^4)(OR^5(OR^6)]_n \qquad (3)$$

wobei

| | |
|---|---|
| $C_6H_7O_2$ | eine Anhydroglucoseeinheit, |
| n | 50 bis 1600 |
| $R^4$, $R^5$ und $R^6$ | unabhängig voneinander eine Polyalkylenoxidkette der Formel (4) |

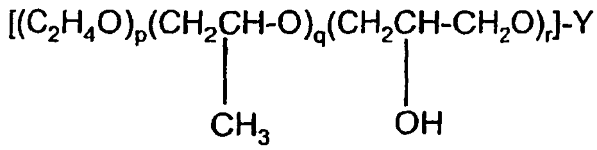

(4)

mit Y = H, $CH_3$, $C_2H_5$ darstellt, und worin p, q und r unabhängig voneinander in $R^4$, $R^5$ und $R^6$ jeweils unabhängig Werte von 0 bis 4 annehmen können, die Summe (p+q+r) addiert über $R^4$, $R^5$ und $R^6$ pro Anhydroglucoseeinheit durchschnittlich größer als 1,3 und kleiner als 4,5 ist, und wobei die Reihenfolge der Oxyalkyleinheiten in der Polyalkylenoxidkette beliebig ist, im Mischungsverhältnis A:B = 1:99 bis 99:1 nach Gewicht.

Ein weiterer Gegenstand der Erfindung ist die Verwendung von Mischungen der oben angegebenen Zusammensetzung als Schutzkolloid in der wäßrigen Emulsionspolymerisation.

Ein weiterer Gegenstand der Erfindung ist ein Verfahren zur Durchführung einer wässrigen Emulsionspolymerisation, wobei man eine Mischung wie oben definiert als Schutzkolloid zusetzt.
Die Polymerisationsgrade n in den Formeln 1 und 3 können gleich sein, oder sie können für verschiedene Werte $n_1$ und $n_2$ stehen. In diesem Fall gelten für $n_1$ und $n_2$ die für n offenbarten Wertebereiche.

Die stöchiometrischen Indices p, q und r in den Formeln 1 und 3 können gleich sein, oder sie können für verschiedene Werte $p_1$, $q_1$ und $r_1$ und $p_2$, $q_2$ und $r_2$ stehen. In diesem Fall gelten für $p_1$, $q_1$ und $r_1$ und $p_2$, $q_2$ und $r_2$ die für p, q und r offenbarten Wertebereiche.

In den Formeln 1 und 3 steht n vorzugsweise für eine Zahl von 100 bis 700, insbesondere 140 bis 500, speziell 160 bis 300.

Die Summe (p+q+r), wie oben definiert, liegt für die Bestandteile A) und B) unabhängig voneinander vorzugsweise zwischen 1,5 bis 3,0.

In Formel 1 beträgt die durchschnittliche Zahl der Allylgruppen ($-CH_2CH = CH_2$-Gruppen) pro Anhydroglucoseeinheit vorzugsweise 0,02 bis 0,04.

Bevorzugte Mischungen aus Celluloseethern enthalten beispielsweise die 2-Propenylether von
Hydroxyethylcellulose ($1,3 < p < 4,5$; $q = 0$; $r = 0$)
Hydroxypropylcellulose ($p = 0$; $1,3 < q < 4,5$; $r = 0$)
Dihydroxypropylcellulose ($p = 0$; $q = 0$; $3 < r < 4,5$)
wobei der Alkylierungsgrad bei 0,03 liegt,
im Gemisch mit Celluloseethern der gleichen Merkmale ohne Substitution mit 2-Propenylether, wobei das Mischungsverhältnis 1:2 beträgt.

Das Mischungsverhältnis zwischen den Bestandteilen A und B liegt vorzugsweise zwischen 10:90 und 90:10, insbesondere bei 1:1.

Die erfindungsgemäßen Mischungen aus Celluloseethern können als Schutzkolloid in Emulsionspolymerisationen verwendet werden. Sie stabilisieren in der Emulsionspolymerisation die entstehenden Polymerdispersionen.

Die verwendete Menge der erfindungsgemäßen Celluloseether bei der Herstellung von derartigen Polymerdispersionen beträgt vorzugsweise 0,2 bis 5,0 Gew.-%, insbesondere 0,3 bis 1,0 Gew.-%, bezogen auf die Gesamtmenge der eingesetzten Monomeren.

Geeignete Monomere für die Emulsionspolymerisation sind ethylenisch ungesättigte, radikalisch polymerisierbare Verbindungen, die an sich wasserunlöslich sind, beispielsweise einfache ethylenisch ungesättigte Kohlenwasserstoffe mit Kettenlängen von 2 bis 12 Kohlenstoffatomen, vorzugsweise Ethylen und Propylen; Ester mit Kettenlängen zwischen 2 und 12 Kohlenstoffatomen der Acryl-, Methacryl-, Malein-, Fumar- oder Itaconsäure, vorzugsweise Ethyl-, Propyl- und Butylester; Vinylester von unverzweigten und verzweigten Carbonsäuren mit Kettenlängen von 1 bis 12 Kohlenstoffatomen, insbesondere Vinylacetat und Versaticsäurevinylester; ethylenisch ungesättigte aromatische Verbindungen, vozugsweise Styrol; ethylenisch ungesättigte Aldehyde und Ketone mit 3 bis 12 Kohlenstoffatomen, vorzugsweise Acrolein, Methacrolein und Methylvinylketon, halogenhaltige ethylenisch ungesättigte Verbindungen, beispielsweise Vinylchlorid.

Besonders bevorzugt sind Gemische aus den genannten Monomeren, bei denen mindestens eine Komponente ein Vinylester, vorzugsweise Vinylacetat ist. Es können auch Gemische aus einer oder mehrerer der genannten Monomeren mit hydrophilen Monomeren, beispielsweise Acrylnitril, Acrylsäure, Methacrylsäure, Itaconsäure oder deren Anhydride eingesetzt werden.

Vorzugsweise enthält eine wäßrige Polymerisationsrezeptur, in der die erfindungsgemäßen Celluloseether als Schutzkolloide eingesetzt werden, 10 bis 70 Gew.-%, vorzugsweise 30 bis 60 Gew.%, der oben genannten Monomeren, sowie 0 bis 10 Gew.-% eines oder mehrerer Emulgatoren. Als Radikalstarter werden üblicherweise Diazoverbindungen, Redox-Initiatoren, organische oder anorganische Peroxoverbindungen in Mengen von 0,1 bis 3 Gew.%, vorzugsweise 0,5 bis 1 Gew.-%, bezogen auf die Gesamtmenge der Monomere, eingesetzt. Weitere Hilfsstoffe, beispielsweise Puffersubstanzen oder Konservierungsstoffe, können zugesetzt werden.

Alle Komponenten können zu Beginn der Reaktion gemeinsam vorgelegt sein, wobei das Monomer, bzw. Monomergemisch durch Rührung oder andere Mischaggregate emulgiert wird. Durch Erhöhen der Temperatur wird der Polymerisationsvorgang in Gang gesetzt. Die erforderlichen Temperaturen sind abhängig vom verwendeten Initiatorsystem und betragen zwischen 40 und 120˚C. Nach Anspringen der Reaktion kann durch die Exothermie der Reaktion auch eine Kühlung erforderlich werden. Das Ende der Reaktion ist an einem Abklingen der Exothermie zu erkennen. Zur Vervollständigung der Reaktion wird wahlweise eine Nachreaktion durch äußere Wärmezufuhr nachgeschaltet. Nach Abkühlen können Hilfstoffe zur Einstellung eines pH-Wertes, wie zum Beispiel Puffer, Säuren oder Basen oder zur Stabilisierung, beispielsweise Konservierungsstoffe zugegeben werden. Wahlweise kann die Polymerisation auch mit einem Bruchteil, beispielsweise 10 bis 20 Gew.-% der Monomer- und Radikalstartermenge gestartet werden und nach Anspringen der Reaktion weiter Monomer und Radikalstarter zudosiert werden, vorzugsweise derart, daß die gewünschte Polymerisationstemperatur durch die Zugabe gesteuert wird. Bei diesem Verfahren entstehen Hauptkettenpolymere, keine Pfropfpolymere.

Die erfindungsgemäß erhaltenen Dispersionen werden mit folgenden Eigenschaften charakterisiert:

Viskosität der Dispersionen bei niedrigem Schergefälle ($1,0\ s^{-1}$):

> Für eine gute Verarbeitbarkeit und Stabilität der Dispersion ist vorzugsweise eine Viskosität zwischen 5.000 und 30.000 mPas, insbesondere 10.000 bis 20.000, erwünscht.

Mittlere Teilchengröße der Dispersion:

> Die mittlere Teilchengröße der Dispersion sollte vorzugsweise 200 bis 300 nm (gemessen bei einer Wellenlänge von 435 nm) sein, um ein unerwünschtes Absetzen der Dispersion (Serumbildung) zu verhindern.

Koagulatmenge nach Filtrieren der Dispersion durch ein 100 $\mu$m- und 40 $\mu$m-Sieb, ausgedrückt in mg Koagulat pro

1000 g Dispersion:

Die Dispersionen haben vorzugsweise einen Koagulatanteil von < 200 mg/kg Dispersion bei 100 μm-Filtration und < 300 mg/kg Dispersion bei 40 μm-Filtration. Wasseraufnahme der getrockneten Polymerfilme:

Die Dispersion wird auf eine Platte ausgegossen und zu einem Film getrocknet. Nach Behandlung mit Wasser wird durch die Gewichtszunahme die Wasseraufnahme (in Gew.-% des Eigengewichts des Polymerfilms) ermittelt. Sie sollte vorzugsweise unter 25 %, insbesondere zwischen 5 und 20 Gew.-%, liegen.

Beispiele

Die Angaben der Substitutionsgrade beziehen sich bei Hydroxyethylgruppen auf den molaren Substitutionsgrad (MS), bei den Allylgruppen auf den Grad der Substitution (DS). In beiden Fällen bringen diese Werte zum Ausdruck, wie hoch der Substitutionsgrad der betreffenden Gruppe pro Anhydroglucoseeinheit ist. Die charakteristischen Merkmale der eingesetzten Celluloseether sind in folgender Tabelle zusammengefaßt.
Die hier verwendeten ®Emulsogen-Emulgatoren sind Tenside der Clariant GmbH auf Basis oxethylierter Fett- bzw. Oxoalkohole.
Die in den Beispielen angegebenen Teile und Prozente beziehen sich auf das Gewicht, soweit nicht anders vermerkt. Der Feststoffgehalt der in den folgenden Beispielen hergestellten Dispersionen beträgt ca. 55 %. Folgende Celluloseether wurden in den Beispielen eingesetzt:

Tabelle 1

| Nr. | Produkt Tylose | Viskositätsstufe (Höppler; 1,9 % aq; absolut trocken) | $MS_{EO}$ | $DS_{Allyl}$ | n |
|---|---|---|---|---|---|
| 1 | H 15 YG4 | 15 | 2,50 | - | 195 |
| 2 | H 180 YG4 | 180 | 2,50 | - | 500 |
| 3 | H 200 YG4 | 200 | 2,50 | - | 520 |
| 4 | E 89906 | 40 | 1,76 | 0,023 | 280 |
| 5 | E 80201 | 150 | 2,11 | 0,026 | 450 |
| 6 | E 80206 | 1000 | 2,43 | 0,027 | 700 |
| 7 | 97/087C | 20 | 1,72 | 0,055 | 210 |
| 8 | 97/122C | 20 | 2,15 | 0,042 | 210 |
| 9 | KR 011 /00 | 3000 | 2,20 | 0,029 | 950 |
| 10 | KR 012/00 | 10000 | 2,39 | 0,029 | 1300 |

$MS_{EO}$ entspricht der Summe p+q+r. Die Produkte 1 bis 3 entsprechen dem Bestandteil B), die Produkte 4 bis 10 dem Bestandteil A) der erfindungsgemäßen Mischung.

Beispiel 1 (Standard) Tylose H 15 YG4 (100 %): Herstellung einer Vinylester-Polymerdispersion unter Verwendung von Hydroxyethylcellulose.

Das verwendete Monomergemisch besteht aus 75 Gew.-% Vinylacetat und 25 Gew.-% ®VeoVa 10 (Vinylester α-verzweigter $C_{10}$-Carbonsäuren, Fa. Shell). In einem 2 Liter Reaktor mit Planschliff, Deckel und installiertem Rückflußkühler werden folgende Substanzen der Reihe nach eingewogen und vorgelegt:

Tabelle 2

| Substanz | Menge [g] | Menge [%] auf Gesamtansatz |
|---|---|---|
| E-Wasser | 423,09 | 32,03 |
| Tylose H 15 YG4 (HEC) | 14,00 | 1,06 |
| Borax | 3,50 | 0,26 |
| Emulsogen EPA 073 | 12,00 | 0,91 |
| Emulsogen EPN 287 | 20,00 | 1,51 |
| Essigsäure (99 - 100 %) | 1,40 | 0,11 |

Tabelle fortgesetzt

| Substanz | Menge [g] | Menge [%] auf Gesamtansatz |
|---|---|---|
| Initiatorlösung (1,17 %ige Kaliumperoxodisulfat-Lösung) | 59,40 | 4,5 |
| Monomergemisch (Vorlage) | 70,00 | 5,3 |

Die Emulsion wird innerhalb von 30 min auf 74 bis 77˚C erhitzt und 15 min bei dieser Temperatur gehalten. Danach werden 630,00 g Monomergemisch mit einer Dosiergeschwindigkeit von 4,49 ml/min über eine Zeitspanne von 2 h 40 min und 85,61 g Initiatorlösung (1,17 %ige Kaliumperoxodisulfat-Lösung) mit einer Dosiergeschwindigkeit von 0,51 ml/min über eine Zeitspanne von 2 h 50 min aus zwei getrennten Dosimaten zugegeben. Die Reaktionstemperatur wird bei 80˚C gehalten.

Nach beendeter Dosierung von Monomer und Initiator wird die Reaktionstemperatur bei 80˚C über 2 h beibehalten. Danach wird die Dispersion abgekühlt und bei 40˚C mit 2 g ®Nipacide CFX 4 (Produkt der Clariant GmbH) konserviert. In Tabelle 1, 2, 3 und 4 sind die Eigenschaften der Polymerdispersionen zusammengefaßt.

Beurteilung: Die Polymerdispersion zeigt in allen geprüften Eigenschaften zufriedenstellende Resultate. Die Koagulatanteile und Wasseraufnahme des Films sind erhöht.

Beispiel 2 Tylose H 15 YG4/E 89906 (90/10; 90 %):

Anstelle von 14 g Tylose H 15 YG4 werden nur 12,6 g vom Gemisch Tylose H 15 YG4/E 89906 (90/10) verwendet.

Beurteilung: Die Polymerdispersion zeigt in allen geprüften Eigenschaften zufriedenstellende Resultate. Die Wasseraufnahme ist reduziert, die Partikelgröße um ca. 13 % und die Koagulatmenge um ca. 10 % reduziert.

Beispiel 3 Tylose H 15 YG4/E 80201 (90/10; 90 %):

Anstelle von 14 g Tylose H 15 YG4 werden nur 12,6 g vom Gemisch Tylose H 15 YG4/E 80201 (90/10) verwendet.

Beurteilung: Die Polymerdispersion zeigt in allen geprüften Eigenschaften zufriedenstellende Resultate. Die Wasseraufnahme ist deutlich reduziert, die Partikelgröße um ca. 15 % und die Koagulatmenge um ca. 10 % reduziert.

Beispiel 4 Tylose H 15 YG4/E 80206 (90/10; 90 %):

Anstelle von 14 g Tylose H 15 YG4 werden nur 12,6 g vom Gemisch Tylose H 15 YG4/E 80206 (90/10) verwendet.

Beurteilung: Die Polymerdispersion zeigt in allen geprüften Eigenschaften gute Resultate. Die Wasseraufnahme ist deutlich reduziert, die Partikelgröße um ca. 15 % und die Koagulatmenge erfreulicherweise drastisch um ca. 62 % reduziert.

Beispiel 5 Standard Tylose H 200 YG4:

Anstelle von 14 g Tylose H 15 YG4 werden 14g Tylose H 200 YG4 verwendet. Beurteilung: Die Polymerdispersion zeigt in allen geprüften Eigenschaften zufriedenstellende Resultate. Der Koagulatanteil ist gegenüber Beispiel 1 reduziert, die Partikelgröße und die Dispersionsviskosität erhöht.

Beispiel 6 Tylose H 200 YG4/E 89906 (90/10; 90 %):

Anstelle von 14 g Tylose H 15 YG4 werden 12,6 g vom Gemisch Tylose H 200 YG4/E 89906 (90/10) verwendet. Beurteilung: Die Polymerdispersion zeigt in allen geprüften Eigenschaften zufriedenstellende Resultate und ist nicht nur Scher- sondern auch Gefrier-Tau stabil. Die Koagulatmenge ist um ca. 38 % reduziert, die Partikelgröße jedoch auffallend um ca. 27 % erniedrigt, was mit einer Viskositätserhöhung einher geht.

Beispiel 7 Tylose H 200 YG4/E 80201 (90/10; 90 %):

Anstelle von 14 g Tylose H 15 YG4 werden nur 12,6 g vom Gemisch Tylose H 200 YG4/E 80201 (90/10) verwendet.

Beurteilung: Die Polymerdispersion zeigt in allen geprüften Eigenschaften zufriedenstellende Resultate. Bis auf eine

leichte Reduzierung (ca. 15 %) der Partikelgröße im Vergleich zu Dispersion aus Beispiel 5 ist sie dieser nahezu gleich.

Beispiel 8 Tylose H 15 YG4/E 80206 (90/10; 90 %):

Anstelle von 14 g Tylose H 15 YG4 werden nur 12,6 g vom Gemisch Tylose H 15 YG4/E 80206 (90/10) verwendet.
Beurteilung: Die Polymerdispersion zeigt in allen geprüften Eigenschaften sehr gute Resultate. Die Koagulatmenge ist erfreulicherweise drastisch um ca. 62 % reduziert, bei sonst praktisch gleich bleibenden physikalischen Eigenschaften der Dispersion im Vergleich zu Beispiel 5.

Es ist weiterhin Gegenstand der Erfindung und dies zeigen die folgenden Beispiele, dass die höher allylierten Produkte ($DS_{Allyl}$ > 0,04) "verdünnt" eingesetzt in Abmischungen mit herkömmlicher HEC zu vergleichbar guten Ergebnissen führen, wie Produkte im $DS_{Allyl}$-Bereich 0,01 - 0,04 (Veretherungszielbereich $DS_{Allyl}$ 0,025-0,03). Die Dispersionen zeichnen sich zudem durch besondere Stabilität (Gefrier-Tau- und Scherstabilität) aus.

Beispiel 9 Standard Tylose E 89906 (50 %):

Anstelle von 14 g Tylose H 15 YG4 werden 7 g von Tylose E 89906 (hier als Standard für Bsp. 10 bis 13 eingesetzt) mit einem $DS_{Allyl}$ von 0,027 verwendet. Beurteilung: Die Polymerdispersion zeigt in allen geprüften Eigenschaften gute Resultate.

Beispiel 10 mit Produkt 97/087C (50 %):

Anstelle von 14 g Tylose H 200 YG4 werden 7 g einer Allylglycidyl-hydroxyethylcellulose mit einem $DS_{Allyl}$ von 0,055 verwendet (Produkt 97/087C).

Beurteilung: Die Ergebnisse zeigen, daß die höher $DS_{Allyl}$ veretherte AM-HEC-Type ungemischt eingesetzt und bei gleicher Menge deutliche Nachteile gegenüber Standard Tylose E 89906 hat. Der Koagulatanteil liegt um ca. 440 % höher als in Beispiel 9.

Beispiel 11 mit Produkt 97/122C (50 %):

Anstelle von 14 g Tylose H 200 YG4 werden 7 g einer Allylglycidylhydroxyethylcellulose mit einem $DS_{Allyl}$ von 0,042 verwendet (Produkt 97/122C). Beurteilung: Die Ergebnisse zeigen, daß die höher $DS_{Allyl}$ veretherte AM-HEC-Type ungemischt eingesetzt und bei gleicher Menge deutliche Nachteile gegenüber Standard Tylose E 89906 hat. Der Koagulatanteil liegt um ca. 175 % höher als in Beispiel 9.

Beispiel 12 mit Produkt 97/122C/H 200 YG4 (50/50; 50 %):

Anstelle von 14 g Tylose H 200 YG4 werden 7 g eines Gemisches aus Allylglycidylhydroxyethylcellulose mit $DS_{Allyl}$ von 0,042 (97/122C)/Tylose H 200 YG4 (50/50) verwendet.
Beurteilung: In der Mischung mit Tylose H 200 YG4 führt die höher allylierte Allylglycidyl-hydroxyethylcellulose zu einer Dispersion mit überraschenderweise gleich guten Eigenschaften wie in Beispiel 9, und der Koagulatanteil sinkt sogar um ca. 16 %.

Beispiel 13 mit Produkt 97/122C/H 200 YG4 (90/10; 90 %):

Anstelle von 14 g Tylose H 200 YG4 werden 12,6 g eines Gemisches aus Allylglycidylhydroxyethylcellulose mit einem $DS_{Allyl}$ von 0,042 mit Tylose H 200 YG4 (90/10) verwendet.
Beurteilung: Die Ergebnisse zeigen, daß die höher $DS_{Allyl}$ veretherte AM-HEC-Type gemischt mit Tylose H 200 YG4 Dispersionen von mindestens gleich guter Qualität ergibt wie die Formulierungen aus den Beispielen 2 bis 4, 6 bis 8.

Nachfolgend Beispiele bei extremen Mischungsverhältnissen AM-HEC/HEC (5/95, 95/5):

Beispiel 14 Tylose E 80206/H 200 YG4 (5/95; 90 %):

Anstelle von 14 g Tylose H 200 YG4 werden 12,6 g eines Gemisches aus Tylose E 89906/H 200 YG4 (5/95) verwendet.
Beurteilung : Die Polymerdispersion zeigt in allen geprüften Eigenschaften zufriedenstellende Resultate. Die Reduzierung der AM-HEC-Komponente (Tylose E 89906) im Gemisch auf 95/5 gegenüber dem Gemisch im Beispiel 6 (90/10) verändert die Dispersionseigenschaften und führt zu einer leichten Erhöhung des Koagulats, die Partikelgröße wird

gröber und die Viskosität der Dispersion verringert sich.

Beispiel 15 Tylose E 89906/H 200 YG4 (95/5; 50 %):

Anstelle von 14 g Tylose H 200 YG4 werden 7 g eines Gemisches aus Tylose E 89906/H 200 YG4 (95/5) verwendet.
Beurteilung: Die Ergebnisse zeigen, daß die 5 % Beimischung der Tylose H 200 YG4 zu E 89906 eine Dispersionen von höherer Qualität ergibt wie die vergleichbare Formulierung aus Beispiel 9 mit ausschließlich Tylose E 89906. Die Wasseraufnahme ist um 15 % und das Koagulat um 41 % geringer.

Es folgen Beispiele unter Verwendung von AM-HEC mit erhöhter Viskositätsstufe (3000 und 10000 mPas) im Gemisch mit HEC:

Beispiel 16 Tylose KR 011/00 (50 %):

Anstelle von 14 g Tylose H 200 YG4 werden 7 g einer AM-HEC mit Viskositätsstufe 3000 mPas verwendet.
Beurteilung: Die Dispersion zeigt gute Stabilität aber leicht erhöhtes Koagulat (175 mg/1000g Dispersion).

Beispiel17 Tylose KR 011/00/H 180 YG4 (50/50; 50 %):

Anstelle von 14 g Tylose H 200 YG4 werden 7 g eines Gemischs aus AM-HEC mit Viskositätsstufe 3000 mPas und Tylose H 180 YG4 verwendet.
Beurteilung: Die Dispersion ist ab dem 2. Zyklus nicht gefrier-tau-stabil, ist aber scherstabil. Die Koagulatmenge hat sich durch den anteiligen Ersatz durch H 180 YG4 erfreulicherweise auf die Hälfte zu Beispiel 16 reduziert.

Beispiel 18 Tylose KR 012/00 (50 %):

Anstelle von 14 g Tylose H 200 YG4 werden 7 g einer AM-HEC mit Viskositätsstufe 10000 mPas verwendet.
Beurteilung: Die Dispersion zeigt gute Stabilität aber erhöhtes Koagulat (244 mg/1000 g Dispersion).

Beispiel19 Tylose KR 012/00/H 180 YG4 (60 / 40; 50 %):

Anstelle von 14 g Tylose H 200 YG4 werden 7 g eines Gemischs aus AM-HEC mit Viskositätsstufe 10000 mPas und Tylose H 180 YG4 verwendet (60/40). Beurteilung: Die Dispersion ist sowohl gefrier-tau- als auch scherstabil. Gegenüber Beispiel 18 hat sich die Koagulatmenge durch den anteiligen Ersatz durch H 180 YG4 erfreulicherweise auf ca. 1/3 (100 μm) bzw. ca. ½ (40 μm) reduziert. Die Viskosität liegt im praktikablen Bereich (9700 mPas).

Beispiel 20 Tylose KR 012/00/H 180 YG4 (50/50; 50 %):

Anstelle von 14 g Tylose H 200 YG4 werden 7 g eines Gemischs aus AM-HEC mit Viskositätsstufe 10000 mPas und Tylose H 180 YG4 verwendet (50/50). Beurteilung: Die Dispersion ist sowohl gefrier-tau- als auch scherstabil. Gegenüber Beispiel 18 hat sich die Koagulatmenge durch den anteiligen Ersatz durch H 180 YG4 erfreulicherweise auf 50 % reduziert. Erkennbar ist auch der starke Einfluß auf die Viskosität durch das Spiel am Mischungsverhältnis. Im Vergleich zu Beispiel 19 ist die Viskosität auf den fast doppelten Betrag erhöht, liegt aber auf dem gleichen Niveau wie Beispiel 17.

Tabelle 3

| Schutzkolloid Tylose | Bsp. Nr. | Einsatzmenge [%] | Mischverhältnis [Gt] | Partikelgröße [nm] bei λ=435 nm | Partikelgröße [nm] bei λ=588 nm | Koagulat > 100 µm [mg/1000 g Dispersion] | Koagulat 100 - 40 µm [mg/1000 g Dispersion] | Viskosität bei 1s$^{-1}$ [mPas] |
|---|---|---|---|---|---|---|---|---|
| H 15 YG4 | 1 | 1,06 | - | 314 | 368 | 141 | 157 | 9590 |
| H 15 YG4 / E 89906 | 2 | 0,95 | 90/10 | 275 | 315 | 139 | 128 | 12880 |
| H 15 YG4 / E 80201 | 3 | 0,95 | 90/10 | 265 | 307 | 100 | 169 | 14520 |
| H 15 YG4 / E 80206 | 4 | 0,95 | 90/10 | 273 | 304 | 65 | 48 | 15590 |
| H 200 YG4 | 5 | 1,06 | - | 329 | 397 | 90 | 105 | 13860 |
| H 200 YG4 / E 89906 | 6 | 0,95 | 90/10 | 243 | 289 | 80 | 45 | 16120 |
| H 200 YG4 / E 80201 | 7 | 0,95 | 90/10 | 280 | 336 | 112 | 63 | 14440 |
| H 200 YG4 / E 80206 | 8 | 0,95 | 90/10 | 314 | 368 | 80 | 23 | 11680 |
| E 89906 | 9 | 0,53 | - | 310 | 342 | 107 | 24 | 11580 |
| 97/087C | 10 | 0,53 | - | 344 | 406 | 181 | 488 | 13000 |
| 97/122C | 11 | 0,53 | - | 345 | 401 | 120 | 160 | 9950 |
| H 200 YG4 / 97/122C | 12 | 0,53 | 50/50 | 311 | 344 | 72 | 32 | 10770 |
| H 200 YG4 / 97/122C | 13 | 0,95 | 90/10 | 266 | 318 | 133 | 94 | 16330 |
| E 89906 / H 200 YG4 | 14 | 0,95 | 5/95 | 288 | 342 | 82 | 84 | 10150 |
| E 89906 / H 200 YG4 | 15 | 0,53 | 95/5 | 299 | 328 | 38 | 39 | 10500 |

Tabelle 4

| Schutzkolloid Tylose | Bsp. Nr. | Einsatzmenge [%] | Mischverhältnis [Gt] | Scherstabilität | Gefrier-Tau-Stabilität | Wasseraufnahme [%] |
|---|---|---|---|---|---|---|
| H 15 YG4 | 1 | 1,06 | - | Stabil | Stabil | 25,3 |
| H 15 YG4 / E 89906 | | 0,95 | 90/10 | Stabil | instabil | 20,3 |
| H 15 YG4 / E 80201 | 3 | 0,95 | 90/10 | Stabil | instabil | 18,8 |
| H 15 YG4 / E 80201 | 4 | 0,85 | 90/10 | Stabil | instabil | 20,6 |
| H 15 YG4 / E 80206 | 5 | 0,95 | 90 / 10 | Stabil | instabil | 21,9 |
| H 200 YG4 | 6 | 1,06 | - | Stabil | Instabil | 22,1 |
| H 200 YG4 / E 89906 | 8 | 0,95 | 90 / 10 | Stabil | Stabil | 22,8 |
| H 200 YG4 / E 80201 | 9 | 0,95 | 90/10 | Stabil | Instabil | 21,2 |
| H 200 YG4 / E 80206 | 10 | 0,95 | 90/10 | Stabil | Instabil | 23,5 |
| E 89906 | 11 | 0,53 | - | Stabil | Stabil | 20,4 |
| 97/087C | 12 | 0,53 | - | Stabil | Stabil | 25,6 |
| 97/122C | 13 | 0,53 | - | Stabil | Stabil | 24,1 |
| H 200 YG4 / 97/122C | 14 | 0,53 | 50/50 | Stabil | Stabil | 21,3 |
| H 200 YG4 / 97/122C | 15 | 0,95 | 90/10 | Stabil | Instabil | 25,0 |
| E 89906 / H 200 YG4 | 14 | 0,95 | 5/95 | Stabil | Stabil | 22,0 |
| E 89906 / H 200 YG4 | 15 | 0,53 | 95 / 5 | Stabil | Stabil | 17,4 |

Tabelle 5

| Schutzkolloid Tylose | Bsp. Nr. | Einsatzmenge [%] | Mischverhältnis [Gt] | Partikelgröße [nm] bei $\lambda$=435 nm | Partikelgröße [nm] bei $\lambda$=588 nm | Koagulat > 100 $\mu$m [mg/1000 g Dispersion] | Koagulat 100 - 40 $\mu$m [mg/1000 g Dispersion] | Viskosität bei 1 $s^{-1}$ [mPas] |
|---|---|---|---|---|---|---|---|---|
| KR 011/00 | 16 | 0,53 | - | - | 383 | 107 | 68 | 13460 |
| KR 011/00 / H 180 YG4 | 17 | 0,53 | 50/50 | - | 288 | 49 | 38 | 18960 |
| KR 011/00 | 18 | 0,53 | - | - | 375 | 170 | 74 | 14470 |
| KR 011/00 / H 180 YG4 | 19 | 0,53 | 60/40 | - | 323 | 54 | 34 | 9700 |
| KR 011/00 / H 180 YG4 | 20 | 0,53 | 50/50 | - | 313 | 63 | 58 | 18810 |

Tabelle 6

| Schutzkolloid Tylose | Bsp. Nr. | Einsatzmenge [%] | Mischverhältnis [Gt] | Scherstabilität | Gefrier-Tau-Stabilität |
|---|---|---|---|---|---|
| KR 011/00 | 16 | 0,53 | - | Stabil | Stabil |
| KR 011/00 / H 180 YG4 | 17 | 0,53 | 50/50 | Stabil | Instabil |
| KR 011/00 | 18 | 0,53 | - | Stabil | Stabil |
| KR 011/00 / H 180 YG4 | 19 | 0,53 | 60/40 | Stabil | Stabil |
| KR 011/00 / H 180 YG4 | 20 | 0,53 | 50/50 | Stabil | Stabil |

Bestimmung des Polymerisationsgrades von Celluloseethern

Für die Zwecke der vorliegenden Erfindung sind Polymerisationsgrade von Celluloseethern nach folgendem Verfahren zu bestimmen.

Nach Staudinger besteht für lineare Makromoleküle eine lineare Beziehung zwischen der spezifischen Viskosität der Sol-Lösung ($\eta_{spez} \leq 0,3$) und dem Polymerisationsgrad bzw. dem Molekulargewicht. Auf dieser Basis erfolgt die Bestimmung des Mittelwertes $DP_{Visk}$ durch Messung der Viskosität hoch verdünnter Celluloseether-Lösungen.

Hierbei wird die Grenzviskositätszahl mit Hilfe der Messung an verdünnten wäßrigen Celluloseether-Lösungen mittels einem Ubbelohde-Kapillarviskosimeter (für manuelle Absolutmessungen, nach ISO/DIN 51562, siehe DIN 51562-1 (Teil 1): Bauform und Durchführung der Messung) mit Kapillare Nr. 0c bestimmt und hieraus der Polymerisationsgrad errechnet.

Formeller Zusammenhang im Detail:

Für lineare Polymere besteht zwischen der spezifischen Viskosität ($\eta_{spez}$) hinreichend verdünnter Lösungen (Sol-Lösung; $\eta_{spez} < 0,3$) und dem mittleren Polymerisationsgrad $(\overline{DP}_{Visk})$ bzw. dem mittleren Molekulargewicht ($\overline{M}_{Visk}$ *in* $g \cdot mol^{-1}$) der folgende lineare Zusammenhang:

$$\eta_{spez} = K_m \cdot c \cdot \overline{DP}_{Visk} \qquad [---] \qquad (1)$$

$$\eta_{spez} = K_m \cdot c_{gm} \cdot \overline{M}_{Visk} \qquad [---] \qquad (2)$$

wobei $K_m$ eine spezifische Konstante in $cm^3 \cdot g^{-1}$ und $c$ die Konzentration des Polymeren in $g \cdot cm^{-3}$ bzw. $c_{gm}$ die Konzentration der Monomereinheit in $mol \cdot cm^{-3}$ ist.

Hierbei kann $\eta_{spez}$ aus der reduzierten Viskosität $\left(\eta_r = \frac{t_{Lsg}}{t_{Lsgm}}\right)$ wie folgt berechnet werden:

$$\eta_{spez} = \frac{t_{Lsg} - t_{Lsgm}}{t_{Lsgm}} = \frac{t_{Lsg}}{t_{Lsgm}} - 1 = \eta_r - 1 \qquad [---] \qquad (3)$$

worin $t_{Lsg}$ und $t_{Lsgm}$ die Kapillardurchlaufzeiten von Lösung und Lösungsmittel (hier Wasser) sind.

Die Größe $\eta_{spez}/c$ bzw. $\eta_{spez}/c_{gm}$ wird reduzierte spezifische Viskosität oder Viskositätszahl ($\eta_{red}$) genannt.

$$\frac{\eta_{spez}}{c} = \eta_{red} = K_m \cdot \overline{DP}_{Visk} \qquad [cm^3 \cdot g^{-1}] \qquad (4)$$

$$\frac{\eta_{spez}}{c_{gm}} = \eta'_{red} = K_m \cdot \overline{M}_{Visk} \qquad [cm^3 \cdot mol^{-1}] \qquad (5)$$

Bei hinreichend kleiner Konzentration und kleinem Schergefälle ist die reduzierte spezifische Viskosität eine charakteristische Produktkonstante, die als "Staudinger-Index" oder "Grenzviskositätszahl" ("limiting viscosity number" oder "intrinsic viscosity") bezeichnet wird ([η]).

$$\lim_{\substack{c \to 0 \\ D \to 0}} \frac{\eta_{spez}}{c} = [\eta] = K_m \cdot \overline{DP}_{Visk} \qquad [cm^3 \cdot g^{-1}] \qquad (6)$$

Die Bestimmung von $c \to 0$ z. B. mit Hilfe von graphischen Methoden ($\eta_{spez}/c$ gegen $c$ bzw. $\eta_{spez}/c$ gegen $\eta_{spez}$) oder nach Heß-Philippoff (Hess, K. und Philippoff, M. Ber. dtsch. chem. Ges. 70, 639 (1937)) (bei nur einer Konzentration) entfällt bei den Meßbedingungen im Sol-Bereich.

Etwa ab $\overline{DP}_{Visk} \geq 400$ (entspricht einer Viskositätsstufe von etwa 100 mPa·s) ist das bei den Ubbelohde-Bestimmungen vorliegende Geschwindigkeitsgefälle (D in $s^{-1}$) zu berücksichtigen, da dann die Forderung $D \to 0$ nicht mehr hinreichend erfüllt ist.

Dies kann nach Rodriguez und Goettler (Rodriguez, F. und Goettler, L. A., Transactions of the Society of Rheology VIII, 3 - 17 (1964), "The Flow of Moderately Concentrated Polymer Solutions in Water") mittels Aufnahme einer Fließkurve mit einem Absolutviskosimeter erfolgen. Hierbei wird ein Korrekturfaktor ermittelt, der als Strukturviskosität bezeichnet und im folgenden $\eta_{st3}$ abgekürzt wird. Es gilt:

$$\eta_{st3} = \frac{\log \eta_{E_d}}{\log \eta_N} \qquad [---] \qquad (7)$$

mit der Viskosität $\eta_{E_d}$ bei der dissipierten Energie $E_d$, wie sie während der Messung nach Ubbelohde vorliegt, und der Nullscherviskosität $\eta_N$.

Bei Verwendung der Kapillare 0c und einer Durchlaufzeit D von rund 400 s beträgt $E_d$ ca. $10^3$ Pa·s$^{-1}$. Dies ergibt sich aus dem Durchflußvolumen V und dem Kapillarenradius R wie folgt:

$$D = \frac{8 \cdot V}{3 \cdot \pi \cdot R^3 \cdot D} = \frac{370850}{D} \qquad [s^{-1}] \qquad (8)$$

$$E_d = \frac{\eta_r \cdot D^2}{1000} \qquad [Pa \cdot s^{-1}] \qquad (9)$$

Die relative Viskosität ($\eta_{rN}$) bei einem Geschwindigkeitsgefälle (und einer Konzentration) gegen 0 erhält man mit Hilfe des Strukturfaktors gemäß:

$$\log \eta_{rN} = \frac{\log \eta_r}{\eta_{st3}} \quad \text{bzw.} \quad \eta_{rN} = 10^{\frac{\log \eta_r}{\eta_{st3}}} \qquad [---] \qquad (10)$$

Die entsprechende spezifische Viskosität ($\eta_{spez,N}$) bei Geschwindigkeitsgefälle und Konzentration gegen 0 ist dann:

$$\eta_{spez,N} = \eta_{rN} - 1 \qquad [---] \qquad (11)$$

Damit ist die Grenzviskositätszahl:

$$[\eta] = \frac{\eta_{rN} - 1}{c} = \frac{\eta_{spez,N}}{c} \qquad [cm^3 \cdot g^{-1}] \qquad (12)$$

Hieraus erhält man schließlich den durchschnittlichen Polymerisationsgrad ($\overline{DP}_{Visk}$) wie folgt:

$$\overline{DP}_{Visk} = \frac{[\eta]}{K_m} = \frac{[\eta]}{1,1} \qquad [---] \qquad (13)$$

## Patentansprüche

**1.** Mischungen aus Celluloseethern, enthaltend

A) allylmodifizierte Celluloseether der Formel (1)

$$[C_6H_7O_2(OR^1)(OR^2)(OR^3)]_n \qquad (1)$$

wobei

$C_6H_7O_2$ eine Anhydroglucoseeinheit
n 50 bis 1600
$R^1$, $R^2$ und $R^3$ unabhängig voneinander eine Polyalkylenoxidkette der Formel (2)

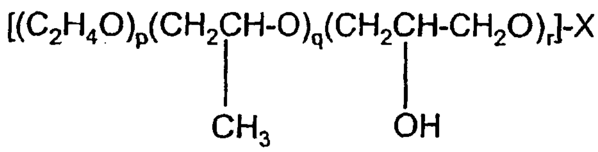

(2)

mit X = H, $CH_3$, $C_2H_5$ oder $CH_2CH = CH_2$ darstellt, und worin p, q und r unabhängig voneinander in $R^1$, $R^2$ und $R^3$ jeweils unabhängig Werte von 0 bis 4 annehmen können, die Summe (p+q+r) addiert über $R^1$, $R^2$ und $R^3$ pro Anhydroglucoseeinheit durchschnittlich größer als 1,3 und kleiner als 4,5 ist, und wobei die Reihenfolge der Oxyalkyleinheiten in der Polyalkylenoxidkette beliebig ist und die durchschnittliche Anzahl der $-CH_2CH = CH_2-$ Gruppen pro Anhydroglucoseeinheit 0,01 bis 0,1 beträgt, und

B) Celluloseether der Formel (3)

$$[C_6H_7O_2(OR^4)(OR^5)(OR^6)]_n \qquad (3)$$

wobei

$C_6H_7O_2$ eine Anhydroglucoseeinheit,
n 50 bis 1600
$R^4$, $R^5$ und $R^6$ unabhängig voneinander eine Polyalkylenoxidkette der Formel (4)

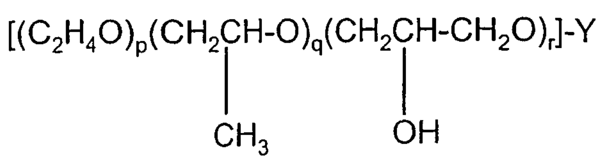

(4)

mit Y = H, $CH_3$, $C_2H_5$ darstellt, und worin p, q und r unabhängig voneinander in $R^4$, $R^5$ und $R^6$ jeweils unabhängig Werte von 0 bis 4 annehmen können, die Summe (p+q+r) addiert über $R^4$, $R^5$ und $R^6$ pro Anhydroglucoseeinheit durchschnittlich größer als 1,3 und kleiner als 4,5 ist, und wobei die Reihenfolge der Oxyalkyleinheiten in der Polyalkylenoxidkette beliebig ist, im Mischungsverhältnis A:B = 1:99 bis 99:1 nach Gewicht.

**2.** Celluloseether nach Anspruch 1, worin n für eine Zahl von 100 bis 700 steht.

**3.** Celluloseether nach Anspruch 1 und/oder 2, worin (p+q+r) von 1,5 bis 3,0 beträgt.

**4.** Celluloseether nach einem oder mehreren der Ansprüche 1 bis 3, worin die durchschnittliche Zahl der Allylgruppen pro Anhydroglucoseeinheit von 0,02 bis 0,04 beträgt.

**5.** Verwendung von Celluloseethern gemäß einem oder mehreren der Ansprüche 1 bis 4 als Schutzkolloid in der Emulsionspolymerisation, wobei Mengen von 0,2 bis 5 Gew.-% Celluloseether bezogen auf das Gewicht der eingesetzten Monomeren zur Anwendung kommen.

## Claims

**1.** A mixture of cellulose ethers, comprising

A) allyl-modified cellulose ethers of formula (1)

$$[C_6H_7O_2(OR^1)(OR^2)(OR^3)]_n \qquad (1)$$

where

$C_6H_7O_2$ is one anhydroglucose unit
n is from 50 to 1600
$R^1$, $R^2$ and $R^3$ independently of one another are a polyalkylene oxide chain of the formula (2)

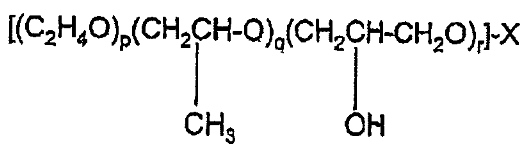 (2)

where X = H, $CH_3$, $C_2H_5$ or $CH_2CH=CH_2$ and in which p, q and r independently of one another, in $R^1$, $R^2$ and $R^3$ each independently, can adopt values from 0 to 4, the sum (p+q+r) added over $R^1$, $R^2$ and $R^3$ per anhydroglucose unit is on average more than 1.3 and less than 4.5, the sequence of the oxyalkyl units in the polyalkylene oxide chain is arbitrary and the average number of $-CH_2CH=CH_2-$ groups per anhydroglucose unit is from 0.01 to 0.1,
and
B) cellulose ethers of formula (3)

$$[C_6H_7O_2(OR^4)(OR^5)(OR^6)]_n \qquad (3)$$

where

$C_6H_7O_2$ is one anhydroglucose unit,
n is from 50 to 1600,
$R^4$, $R^5$ and $R^6$ independently of one another are a polyalkylene oxide chain of formula (4)

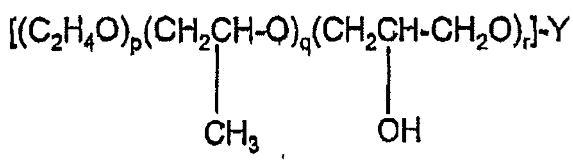 (4)

where
Y = H, $CH_3$ or $C_2H_5$ and in which p, q and r independently of one another, in $R^4$, $R^5$ and $R^6$ each independently, can adopt values of 0 to 4, the sum (p+q+r) added over $R^4$, $R^5$ and $R^6$ per anhydroglucose unit is on average more than 1.3 and less than 4.5, and the sequence of the oxyalkyl units in the polyalkylene oxide chain is arbitrary, in an A:B mixing ratio of from 1:99 to 99:1 by weight.

**2.** Cellulose ethers as set forth in claim 1, wherein n is a number from 100 to 700.

**3.** Cellulose ethers as set forth in claim 1 and/or 2, wherein (p+q+r) is from 1.5 to 3.0.

**4.** Cellulose ethers as set forth in one or more of claims 1 to 3, wherein the average number of allyl groups per anhydroglucose unit is from 0.02 to 0.04.

**5.** The use of cellulose ethers as set forth in one or more of claims 1 to 4 as a protective colloid in emulsion polymerization, employing amounts of from 0.2 to 5 % by weight of cellulose ethers, based on the weight of the monomers used.

**Revendications**

**1.** Mélanges d'éthers cellulosiques, renfermant

A) des éthers cellulosiques modifiés par un groupe allyle de formule (1)

$$[C_6H_7O_2(OR^1)(OR^2)(OR^3)]_n \qquad (1)$$

dans laquelle
$C_6H_7O_2$ représente une unité d'anhydroglucose
n va de 50 à 1600
$R^1$, $R^2$ et $R^3$, indépendamment les uns des autres, représentent une chaîne poly(oxyde d'alkylène) de formule (2)

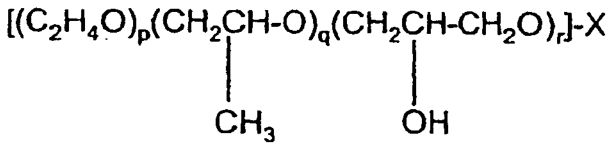 (2)

avec X = H, $CH_3$, $C_2H_5$ ou $CH_2CH{=}CH_2$
et dans laquelle
p, q et r, indépendamment les uns des autres, dans $R^1$, $R^2$ et $R^3$ à chaque fois indépendamment peuvent adopter les valeurs de 0 à 4, la somme de (p+q+r) additionnée par $R^1$, $R^2$ et $R^3$ par unité d'anhydroglucose est en moyenne supérieure à 1,3 et inférieure à 4,5, et la succession d'unités oxyalkyle dans la chaîne poly(oxyde d'alkylène) est arbitraire et le nombre moyen de groupes $-CH_2-CH{=}CH_2$ par unité d'anhydroglucose est de 0,01 à 0,1,
et
B) éthers cellulosiques de formule (3)

$$[C_6H_7O_2(OR^4)(OR^5)(OR^6)]_n \qquad (3)$$

dans laquelle
$C_6H_7O_2$ représente une unité d'anhydroglucose
n va de 50 à 1600
$R^4$, $R^5$ et $R^6$, indépendamment les uns des autres, représentent une chaîne poly(oxyde d'alkylène) de formule (4)

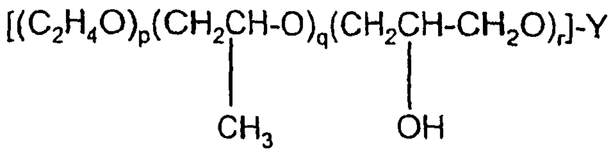 (4)

avec Y = H, $CH_3$, $C_2H_5$, et dans laquelle
p, q et r, indépendamment les uns des autres, dans $R^4$, $R^5$ et $R^6$ à chaque fois indépendamment peuvent adopter les valeurs de 0 à 4, la somme de (p+q+r) additionnée par $R^4$, $R^5$ et $R^6$ par unité d'anhydroglucose est en moyenne supérieure à 1,3 et inférieure à 4,5, et la succession d'unités oxyalkyle dans la chaîne poly(oxyde d'alkylène) est arbitraire, dans un rapport de mélange A:B = 1:99 à 99:1 selon poids.

**2.** Ethers cellulosiques selon la revendication 1, où n va de 100 à 700.

**3.** Ethers cellulosiques selon la revendication 1 et/ou 2, où (p+q+r) va de 1,5 à 3,0.

**4.** Ethers cellulosiques selon une ou plusieurs des revendications 1 à 3, où le nombre moyen des groupes allyle par unité d'anhydroglucose va de 0,02 à 0,04.

**5.** Utilisation d'éthers cellulosiques selon une ou plusieurs des revendications 1 à 4 en tant que colloïde protecteur dans la polymérisation en émulsion, en utilisant des quantités de 0,2 à 5 % en masse d'éthers cellulosiques, par rapport au poids des monomères utilisés.